# EUROPEAN PATENT APPLICATION

(11) **EP 4 841 657 A1**
(43) Date of publication of application: **18.11.2026**
(21) Application number: 26174459.3
(22) Date of filing: 24.04.2026
(51) Int. Cl.: H01B 7/282, H01B 3/08

(54) **SUBSEA POWER CABLE**

(30) Priority: 12.05.2025 NO 20250524
(71) Applicant: Nexans, 92400 Courbevoie (FR)
(72) Inventor: SANGAR, Robin, 1445 Drøbak (NO)
(74) Representative: Acapo Onsagers AS

(57) **Abstract**

A power cable (100), comprising at least one cable core (125) comprising an electrical conductor (110) and an electrically insulating system (120) surrounding the electrical conductor (110); and a water barrier layer (140), surrounding the at least one cable core (125); wherein the water barrier layer (140) comprises glass; a method of manufacture for the power cable (100), and a joint.

## Description

### Field of the invention

The present invention relates to a subsea power cable comprising a water barrier, especially a lead-free water barrier.

### Background

The current carrying parts of subsea power cables may need to be kept dry. Intrusion of humidity or water may cause electrical breakdown of the power cable insulation system. The core section of power cables is therefore usually protected by a water barrier arranged radially around the cable core. Up to date, the dominating material in water barriers for power cables is lead since lead has proven to be a reliable and sturdy sheathing material.

Several solutions for insulation systems providing water barriers to submarine power cables are known, but all have various disadvantages that should be overcome. One drawback is that lead is a high-density materiel adding significant weight to the cable. The heavy weight induces extra costs in the entire value chain from production, under transport, storage, deployment, and when the cable is discarded after reaching its lifetime. Another drawback is that lead has a relatively low fatigue resistance making lead water barriers less suited for dynamical power cables. Furthermore, lead is a rather poisonous material increasingly meeting environmental regulation restrictions. An environmentally friendly replacement of lead as water barrier in power cables is required.

EP2312591 relates to a submarine power cable comprising an electrical conductor surrounded by an insulation, said insulation being surrounded by a metallic moisture barrier. The cable further comprises a semi-conductive adhesive layer surrounding the metallic moisture barrier and a semi-conductive polymeric jacket able to be in electrical contact with sea water surrounding said semi-conductive adhesive layer, the overlaying of the metallic moisture barrier, the semi-conductive adhesive layer and the semi-conductive polymeric jacket forming a 3-layer sheath.

EP3438993 relates to a method of manufacturing a dynamic power cable comprising the steps of
- providing a cable core comprising; an electrical conductor and an electrically insulating layer arranged radially outside of the electrical conductor,
- wrapping a metallic sheet radially around the cable core, the metallic sheet comprising a copper-nickel alloy,
- welding together opposing edges of the metallic sheet to form a continuous water barrier layer around the cable core, wherein the welding is performed by autogenous welding.

EP3786982 relates to a power cable, comprising:
- an electric conductor,
- an electric insulating material enclosing the electric conductor, and
- an inner sheathing enclosing the electric insulating material enclosing the electric conductor, wherein the inner sheathing is made of a CuNiSi-alloy.

Thin, high-resistance metallic screens and laminate solutions are coming up as candidate alternatives to replace lead, but have significant drawbacks and issues related to high-voltage testing and short-circuit current capacity. Due to these issues, the current power cable structures do not allow the use of high-resistance metallic screens, as the power cable may even be quickly damaged and become unfit for use.

The present invention attempts to solve these challenges, or at least to improve on existing solutions.

### SUMMARY OF THE INVENTION

The present invention is defined by the appended claims and in the following:
In a first aspect, the invention relates to a power cable, comprising:
- at least one cable core comprising an electrical conductor and an electrically insulating system surrounding the electrical conductor;
- a water barrier layer, surrounding the at least one cable core;
wherein the water barrier layer comprises glass.

Glass is a flexible and waterproof material and may advantageously be used to form a water barrier layer. The geometry of the glass layer may easily be adapted to the material underneath.

In an embodiment, the power cable may comprise two or more cable cores.

In an embodiment, the power cable may comprise two, three, four or six cable cores.

In an embodiment, the power cable may comprise three cable cores.

In an embodiment, the subsea power cable may be an AC or a DC cable.

In an embodiment, the subsea power cable may be an MI cable.

In an embodiment, the cable is a dynamic cable.

In an embodiment, the cable is a static cable.

In an embodiment, the subsea power cable may be designed for at least 36 kV, at least 52 kV, at least 72,5 kV, at least 145kV or at least 220kV.

In an embodiment, the subsea power cable may be designed for between 36 kV and 800 kV, preferably between 145 kV and 525 kV, preferably between 220 kV and 525 kV.

In an embodiment, the electrically insulating system may comprise a first semi-conducting layer (also called inner semi-conducting layer) surrounding the electrical conductor, an insulating layer surrounding the first semi-conducting layer; and optionally a second semi-conducting layer (also called outer semiconducting layer) surrounding the insulating layer.

In an embodiment, the power cable is a subsea power cable.

In an embodiment, the power cable may be a land cable.

In an embodiment, the power cable may be any cable that needs to be kept dry.

Here the term "glass" refers to an amorphous (non-crystalline) solid material.

In an embodiment the water barrier layer may comprise SiO₂, TiO₂, Al₂O₃ or B₂O₃, Na₂O or CaO.

In an embodiment, the water barrier layer may comprise silicon oxide, titanium oxide and/or aluminium oxide.

In an embodiment the water barrier layer may be a lead-free water barrier layer.

The term "lead-free" as applied here refers to metal foil and/or filler comprising less than 5%, less than 4%, less than 3%, less than 2%, less than 1%, less than 0.5%, less than 0.4%, less than 0.3%, less than 0.2%, less than 0.1%, less than 0.05%, or preferably comprising 0% lead.

In an embodiment, the water barrier layer may be made of silicon oxide.

In an embodiment, the water barrier layer may have a thickness of 0.01 mm to 1 mm.

By having a water thickness between 0.1 and 1mm, the water barrier layer combines sufficient elastic properties, is thick enough to ensure that the layer is waterproof, and thin enough to ensure that the layer does not crack during manufacture and or use. The water barrier layer is also thin enough that there is no adversarial thermal build up in the cable.

In an embodiment, the water barrier layer may have a thickness of 0.01 mm to 0.50 mm, 0.10 mm to 0.25 mm or 0.01 mm to 0.25 mm

In an embodiment, the cable may further comprise at least an electrically conductive element embedded in the water barrier layer.

In an embodiment, the electrically conductive element may be an electrically conductive thread, tape, strip, or ribbon.

In an embodiment, the electrically conductive element may be made of a conductive material, such as metal, conductive alloys, conductive polymers and composites, and/or carbon-based conductive materials.

In an embodiment, the electrically conductive element may be electrically connecting the layers radially inside and outside of the water barrier layer, such as the insulation system to an armouring layer.

Here, the electrically conductive element advantageously reduces the build-up of charging current and the risk for radial discharge in the cable, as a consequence, the life expectancy of the cable is increased.

In an embodiment, the electrically conductive element may form a helix around the at least one cable core. The helix shape advantageously ensures a proper distribution of the thread and protection.

In an embodiment, the electrically conductive element comprises
- aluminium,
- an aluminium alloy of the AA1xxx series, AA2xxx series, AA3xxx series, AA4xxx series or the AA5xxx series according to the Aluminium Association Standard,
- copper
- a copper-alloy
- a CuNi-alloy
- bronze
- brass
- iron
- a Fe-alloy
- stainless steel alloy SS316 - stainless steel alloy S32750.
- titanium or Ti- alloy
   or
- Sn- or Sn alloy.

The advantage of these materials is that they have excellent conductivity.

In an embodiment, the cable may comprise an armouring layer, surrounding the water barrier layer.

In an embodiment, the cable further may comprise a polymer sheath surrounding the water barrier layer and the optional armouring layer.

In a second aspect, the invention relates to a method for manufacturing a power cable, the method comprising the steps of:
a) providing at least a cable core comprising an electrical conductor and an electrically insulating system, arranged radially outside of the electrical conductor;
b) applying a compound to form water barrier layer radially outside of the at least a cable core, by means of chemical vapor deposition;
wherein the water barrier layer comprises glass.

The advantage of using chemical vapor deposition to apply the water barrier layer is that the temperature for applying the water barrier layer is low, which does not deform the cable and or joint. This method also allows for the shape of the water barrier to adapt to the shape of the cable and or joint.

In an embodiment, the compound may be a precursor for forming a glass layer.

In an embodiment the compound may be a precursor for forming SiO₂, TiO₂, Al₂O₃ or B₂O₃, Na₂O or CaO by chemical vapor deposition.

In an embodiment, the compound may be a precursor for forming SiO₂, TiO₂, Al₂O₃ by chemical vapor deposition.

In an embodiment, the chemical vapor deposition is plasma-enhanced chemical vapor deposition.

In an embodiment, the method may futher comprise the step of:
c) applying an electrically conductive element on the at least one cable core; between steps a) and b); and
d) scraping the compound applied on an external surface of the electrically conductive element, after step b).

By applying the electrically conductive element first and forming the water barrier second, the electrically conductive element becomes part of the water barrier, which ensures the watertightness of the water barrier layer.

By scraping the water barrier from an external (radially) surface of the electrically conductive element, conductivity is established between the layers radially inside and outside of the water barrier layer.

In an embodiment, the compound applied on the external surface of the electrically conductive element is scraped on the full external surface of the electrically conductive element to ensure the best possible electrical contact between the electrically conductive element and the layer radially outside of the water barrier layer.

This method thus renders the water barrier conductive, which reduces the build-up of charging current and the risk for radial discharge in the cable, as a consequence, the life expectancy of the cable is increased.

In a third aspect, the invention relates to a joint between a first and second power cable sections, each power cable section comprising:
- at least one cable core comprising an electrical conductor and an electrically insulating system that is arranged radially outside of the electrical conductor;
   wherein the joint comprises
- at least one cable core joint, between the cable cores of the first and second power cable sections, electrically connecting the electrical conductors of the first and second power cable sections;
- a water barrier layer, arranged radially outside of the at least one cable core joint;
wherein the water barrier layer comprises glass.

In an embodiment, the water barrier layer of the joint may be an outermost surface layer of the joint.

Although the invention is detailed for cables and joints, the technology may likewise be applied to any cable accessory that needs to be kept dry, such as cable ends and connectors, such as T-connectors.

Features being solely disclosed in connection with any aspect of the invention are deemed to be disclosed in connection with the other aspects of the invention.

### Short description of the drawings

In the following description this invention will be further explained by way of exemplary embodiments shown in the drawings:
Fig. 1 is a cross-sectional view of a first embodiment of a power cable 100 according to the invention.
Fig. 2 is a cross-sectional view a second embodiment of a power cable 100 according to the invention.
Fig. 3 is an isometric view of the power cable 100 in fig. 2.
Fig. 4 is an isometric view of a joint 500 according to the invention.

### Detailed description of the invention

The current carrying parts of power cables may need to be kept dry. Intrusion of humidity or water may cause electrical breakdown of the power cable insulation system. The core section of power cables is therefore usually protected by a water barrier arranged radially around the cable core. Up to date, the dominating material in water barriers for power cables is lead since lead has proven to be a reliable and sturdy sheathing material.

However, lead is a rather poisonous material increasingly meeting environmental regulation restrictions. An environmentally friendly replacement of lead in water barrier layer in power cables is required.

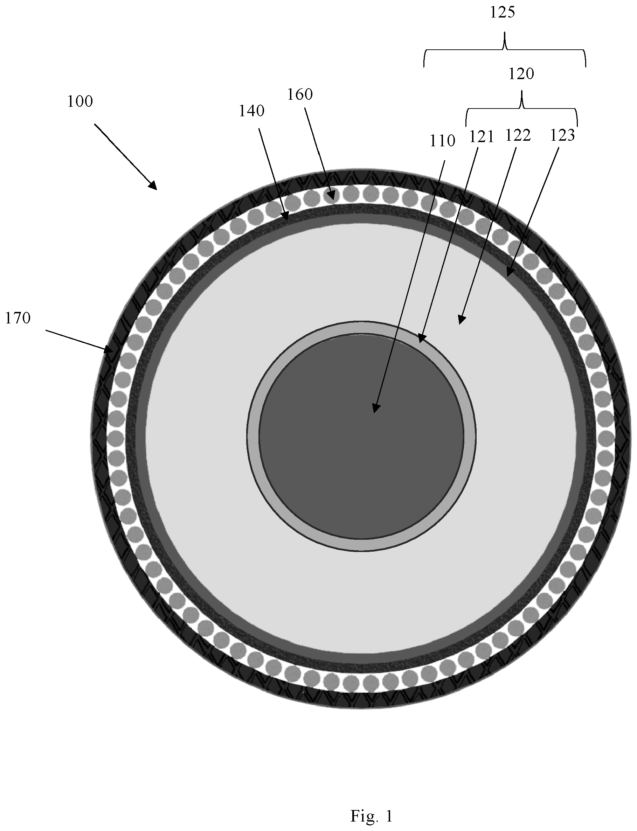

In a first embodiment, illustrated in Fig.1, the power cable 100 comprises a single cable core 125 comprising an electrical conductor 110 and an electrically insulating system 120 surrounding the electrical conductor 110 and a water barrier layer 140, surrounding the cable core 125, wherein the water barrier layer 140 comprises glass. In this embodiment the glass made of SiO₂.

The insulating system 120 here comprises
- a first layer 121 (also called inner semi-conducting layer or inner semicon layer) made of a first semi-conducting material for surrounding the electric conductor 110,
- a second layer 122 (also called insulating layer) made of an insulating material, covering an external surface of the inner semiconducting layer 121,
- a third layer 123 (also called outer semi-conducting layer or outer semicon layer) made of a second semi-conducting material, covering an external surface of the insulating layer 122.

In this first embodiment the power cable also comprises an armouring layer 160 and a polymer sheath 170.

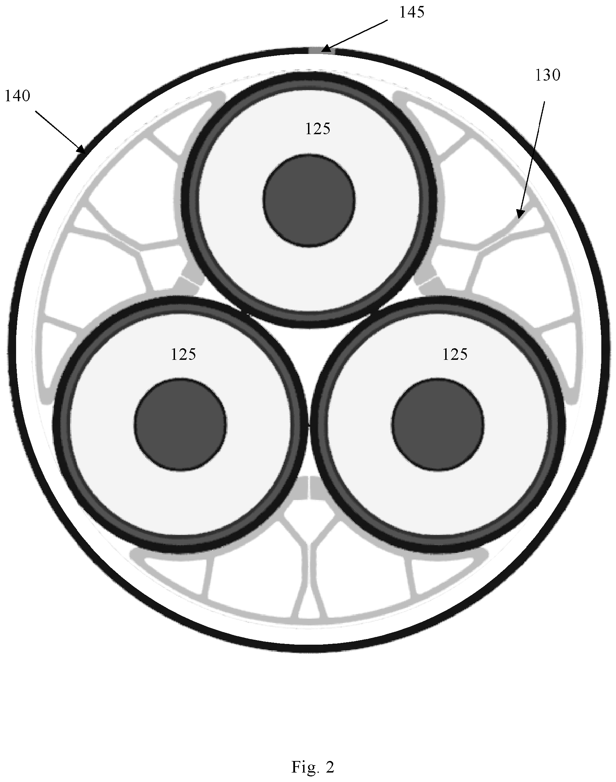

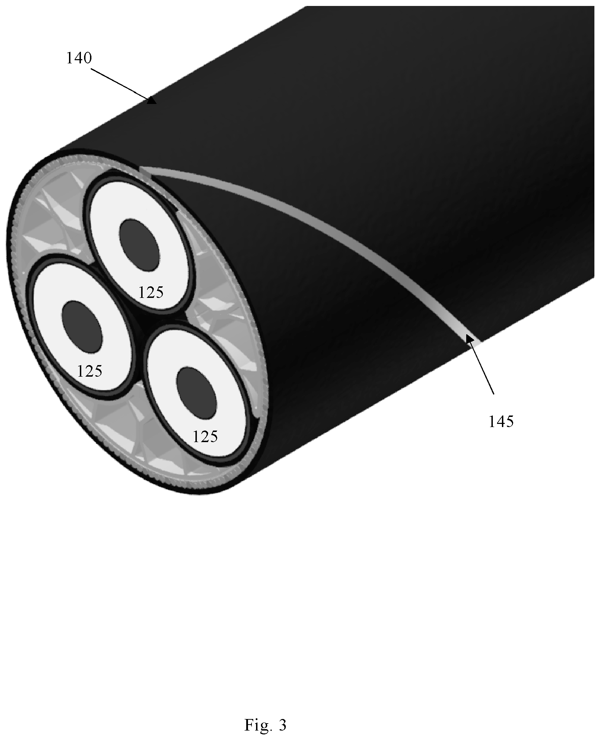

It is now referred to fig. 2 and 3, illustrating a second embodiment of a power cable according to the invention. The power cable 100 comprises three cable cores 125, each comprising an electrical conductor 110 and an electrically insulating system 120 surrounding the electrical conductor 110, filler elements 130 and a water barrier layer 140. In this embodiment, the water barrier is a single water barrier surrounding the three cable cores 125. In further embodiments of a three-conductor power cable, the cable may instead of a single water barrier enclosing all cable cores comprise a separate water barrier for each of the cable cores. In all embodiments, the water barrier layer 140 comprises or is manufactured in glass. In this embodiment the glass is made of SiO₂. The water barrier further comprises an electrically conductive element 145 embedded in the water barrier layer 140.

The insulating system of the cable cores 125 of the cable illustrated in fig. 2 is the same as described for the cable core in fig. 1.

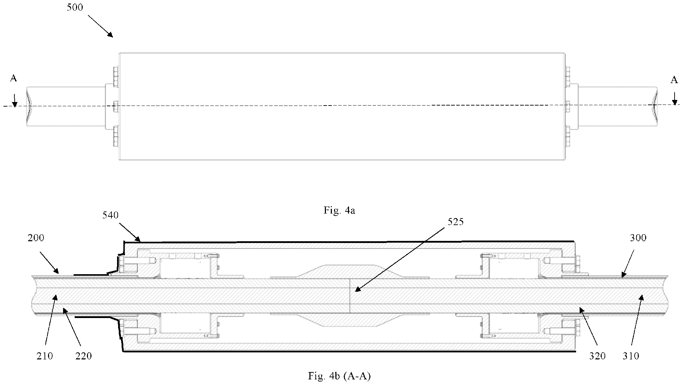

Fig.4 illustrates an embodiment of the joint 500, between a first and second power cable sections 200,300, each power cable section comprising at least one cable core comprising an electrical conductor 210,310 and an electrically insulating system 220,320 that is arranged radially outside of the electrical conductor 210,310. Each of the power cable sections may be end sections of a power cable according to the invention as described above. The joint 500 comprises a cable core joint 525, between the cable cores of the first and second power cable sections, electrically connecting the electrical conductors of the first and second power cable sections, and an outermost water barrier layer 540 comprising glass. The outermost water barrier layer covering the outer surface of the joint, and optionally parts of the power cable sections.

## Claims

1. A power cable (100), comprising:
- at least one cable core (125) comprising an electrical conductor (110) and an electrically insulating system (120) surrounding the electrical conductor (110);
- a water barrier layer (140), surrounding the at least one cable core (125);
**characterized in that** the water barrier layer (140) comprises chemical vapor deposited glass.

2. The power cable (100) according to claim 1, wherein the water barrier layer (140) comprises silicon oxide, titanium oxide and/or aluminium oxide.

3. The power cable (100) according to any one of the previous claims, wherein the water barrier layer (140) is made of silicon oxide.

4. The power cable (100) according to any one of the previous claims, wherein the water barrier layer has a thickness of 0.01 mm to 1 mm.

5. The power cable (100) according to any one of the previous claims, further comprising at least an electrically conductive element (145) embedded in the water barrier layer (140).

6. The power cable (100) according to claim 5, wherein the electrically conductive element (145) forms a helix around the at least one cable core (125).

7. The power cable (100) according to any one of claims 5 and 6, wherein the electrically conductive element (145) comprises
- aluminium,
- an aluminium alloy of the AA1xxx series, AA2xxx series, AA3xxx series, AA4xxx series or the AA5xxx series according to the Aluminium Association Standard,
- copper
- a copper-alloy
- a CuNi-alloy
- bronze
- brass
- iron
- a Fe-alloy
- stainless steel alloy SS316 - stainless steel alloy S32750.
- titanium or Ti- alloy
or
- Sn- or Sn alloy.

8. The power cable (100) according to any one of claims 1-7, further comprising a polymer sheath (160) surrounding the water barrier layer (140).

9. The power cable (100) according to any one of the previous claims, comprising a plurality of cable cores.

10. A method of manufacturing a subsea power cable (100), wherein the method comprises the steps of:
a) providing at least one cable core (125) comprising an electrical conductor (110) and an electrically insulating system (120), arranged radially outside of the electrical conductor (110);
b) applying a compound to form water barrier layer (140) radially outside of the at least one cable core (125), by means of chemical vapor deposition;
wherein the water barrier layer (140) comprises glass.

11. The method according to claim 10, wherein the chemical vapor deposition is plasma-enhanced chemical vapor deposition.

12. The method according to claim 10 or 11, comprising the step of:
c) applying an electrically conductive element (145) on the at least one cable core (125); between steps a) and b); and
d) removing the compound applied on an external surface of the electrically conductive element (145), after step b).

13. A joint (500) between a first and second power cable sections (200,300), each power cable section comprising:
- at least one cable core comprising an electrical conductor (210,310) and an electrically insulating system (220,320) that is arranged radially outside of the electrical conductor (210,310);
wherein the joint (500) comprises
- at least one cable core joint (525), between the cable cores of the first and second power cable sections, electrically connecting the electrical conductors of the first and second power cable sections;
- a water barrier layer, arranged radially outside of the at least one cable core joint;
**characterized in that** the water barrier layer comprises chemical vapor deposited glass.

14. A joint according to claim 13, wherein the water barrier is an outermost surface layer of the joint.
